# EUROPEAN PATENT APPLICATION

(11) **EP 1 926 254 A1**
(43) Date of publication of application: **28.05.2008**
(21) Application number: 07121250.0
(22) Date of filing: 21.11.2007
(51) Int. Cl.: H04L 12/28, H04N 5/00, H04N 5/44

(54) **Media sink device, media source device and method of controlling the same**

(30) Priority: 23.11.2006 KR 20060116425
(71) Applicant: LG Electronics Inc., Yeongdeungpo-gu Seoul 150-721 (KR)
(72) Inventor: Kwon, Kwang Hun, Seoul 137-724 (KR)
(74) Representative: Cabinet Plasseraud

(57) **Abstract**

A media device and controlling method thereof are disclosed, by which consumer electronics control (CEC) support information is provided. The present invention includes a storage unit for storing E-EDID including information indicating whether the media sink device supports CEC, an interface unit corresponding to a data transceiving path between the media source device and the media sink device, and a control unit connected to the media source device to send the E-EDID including the CEC support information to the connected media source device via the interface unit.

## Description

This application claims the benefit of the Korean Patent Application No. 10-2006-0116425, filed on November 23, 2006, which is hereby incorporated by reference as if fully set forth herein.

### BACKGROUND

### Field

The present disclosure relates to a media device and controlling method thereof, and more particularly, to a media sink device, a media source device, and a method of controlling the same. Although the present invention is suitable for a wide scope of applications, it is particularly suitable for providing consumer electronics control (hereinafter abbreviated CEC) support information.

### Discussion of the Related Art

Generally, a media source device for reproducing and processing prescribed media data like a set-top box (hereinafter abbreviated STB) and a media sink device such as a digital television (hereinafter abbreviated DTV) for outputting media data provided by the media source device are connected together via a prescribed media interface. In this case, mutual interfaces can be connected together via an interface cable. And, the interface includes a digital visual interface (hereinafter abbreviated DVI) or a high-definition multimedia interface (hereinafter abbreviated HDMI) for example.

Recently, a digital system gets more complicated and inputs of HDMI among various external inputs of the digital system tend to be currently increased. The HDMI is an interface further upgraded from a conventional DVI. The HDMI transports digital video, digital audio and additional information via a single interface, whereas the DVI transports digital video only. Source devices are used to be connected to a DTV system via an audio interface separate from the DVI. Yet, most of the source devices tend to use the HDMI instead of the DVI due to the appearance of a new interface so-called HDMI.

And, there exists a product capable of controlling a plurality of media devices entirely with a single remote controller if CEC protocol is used in connecting at least one media source device to at least two media sink devices using the current HDMI.

However, information indicating whether the media device supports the CEC protocol is not prepared. So, in case of attempting to actually control a plurality of media devices using the CEC, a device failing to support the CEC does not make a response and does not make an announcement for a presence or non-presence of the CEC support. Thus, when a CEC control signal in inputted, if no response is made, it is necessary to confirm whether the device simply does not support the CEC protocol or whether it is just CEC recognition error. Yet, such a confirming method has not been proposed yet. **SUMMARY**

Accordingly, the present invention is directed to a media sink device, a media source device, and a method of controlling the same that substantially obviate one or more problems due to limitations and disadvantages of the related art.

An object of the present invention is to provide a media sink device, a media source device, and a method of controlling the same, by which consumer electronics control (hereinafter abbreviated CEC) support information is provided.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a media sink device, which is provided with media data by a media source device, according to the present invention includes a storage unit for storing Enhanced-Extended Display Identification Data (hereinafter abbreviated E-EDID) including information indicating whether the media sink device supports CEC, an interface unit corresponding to a data transceiving path between the media source device and the media sink device, and a control unit connected to the media source device to send the E-EDID including the CEC support information to the connected media source device via the interface unit.

In another aspect of the present invention, a media source device, which provides media data to a media sink device, includes a media source providing unit providing the media data to the media sink device, an interface unit corresponding to a data transceiving path between the media source device and the media sink device, and a control unit receiving E-EDID including CEC support information from the media sink device to decide whether the media sink device supports CEC.

In a further aspect of the present invention, a method of controlling a media sink device, which is provided with media data from a media source device, includes the steps of connecting a media source device to the media sink device, transferring E-EDID from the media sink device to the media source device, and extracting CEC support information from the transferred E-EDID.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the implementations and are incorporated in and constitute a part of this disclosure, illustrate implementations and together with the description serve to explain the implementations. In the drawings;

FIG. 1 is a diagram for characteristics of a relation of connection between media source and sink devices supporting HDMI;

FIG. 2A and FIG. 2B are diagrams for pin arrays of an interface between source and sink devices according to an embodiment of the present invention;

FIG. 3A is a diagram for an embodiment of a connection between a source device and a sink device via display data channel (DDC) line of data transport channel and CEC line of CEC transport channel;

FIG. 3B and FIG. 3C are diagrams for embodiments of configuring CEC network through physical addresses;

FIG. 4 is a table information table including CEC support information field of a media device according to the present invention;

FIG. 5 is a block diagram of a media sink device according to one embodiment of the present invention;

FIG. 6 is a block diagram of a media source device according to one embodiment of the present invention; and

FIG. 7 is a flowchart of a method of controlling a media sink device according to one embodiment of the present invention.

### DETAILED DESCRIPTION OF THE INVENTION

Reference will now be made in detail to the implementations, examples of which are illustrated in the accompanying drawings. Wherever possible, the same reference numbers will be used throughout the drawings to refer to the same or like parts.

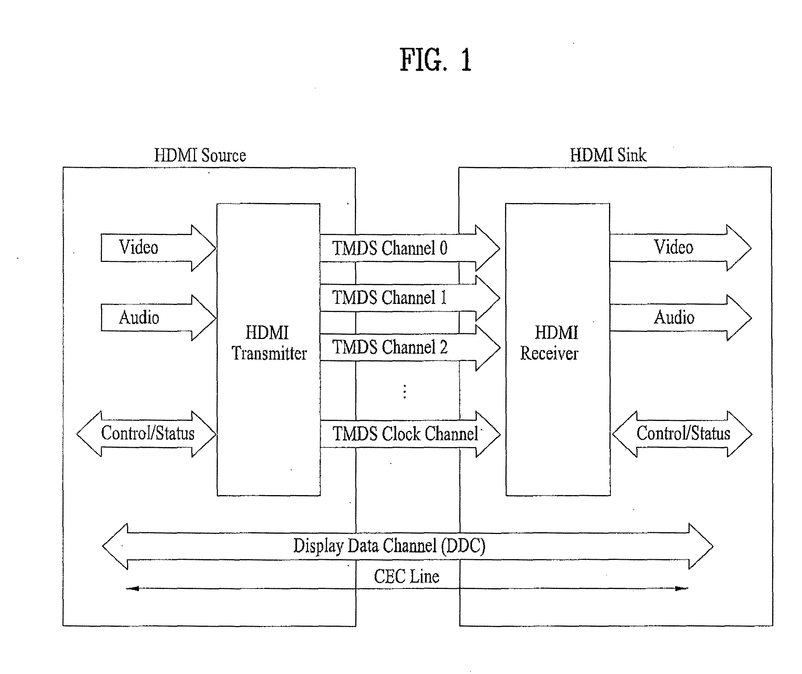

FIG. 1 is a diagram for characteristics of a relation of connection between media source and sink devices supporting HDMI.

Referring to FIG. 1, a media source device and a media sink device include an HDMI unit. Through the HDMI unit, audio/video signals, display data and CEC signal are exchanged.

The media sink device (occasionally, called a sink device) means a device that receives media data such as multimedia contents and the like from the media source device (occasionally, called a source device) and then outputs the received media data externally.

And, the media source device means a device that reproduces and processes media data and then provides the processed data to the media sink device. And, the media source device includes one of a set-top box (STB), a DVD (digital video disk) player, a PVR (personal video recorder) player, a digital video recorder, a personal TV receiver (PTR), a personal video station (PVS), a hard disk recorder (HDR), and the like. And, the media source device is connected to an interface of the media sink device.

The interface of the media sink device is a path for receiving media data such as multimedia contents and the like from the media source device. And, the interface of the media sink device is connectible through a cable. As an example of the interface, there is a high definition media interface (HDMI), a digital visual interface (DVI) or the like. In the following description of the present invention, HDMI is exemplarily used as a representative embodiment of the interface, by which the scope of the appended claims and their equivalents are not restricted.

Channels as paths for connecting a sink device and a source device together via HDMI interface are explained as follows.

First of all, major channels include TDMS channel, a display data channel (DDC), and CEC line.

The TDMS channel is used to carry all video and audio data and infoFrames for supplementary data.

The DDC is used to determine capabilities and characteristics of a sink device in a manner that a source device reads an E-EDID data structure.

And, the CEC line is used for automatic setup tasks or tasks associated with a unified remote controller.

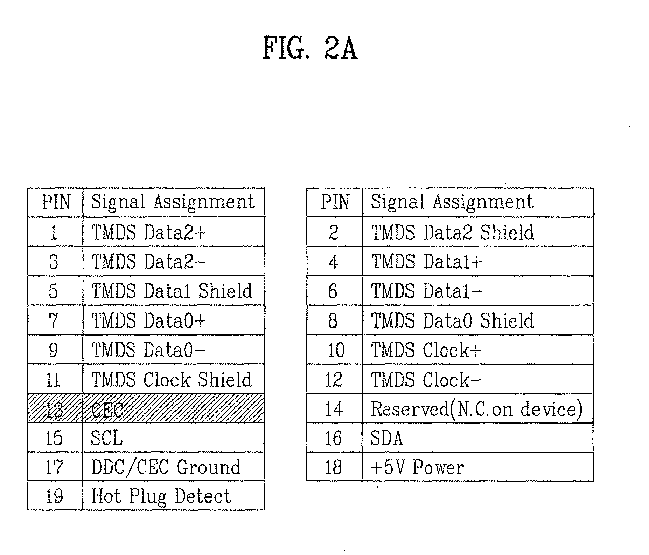

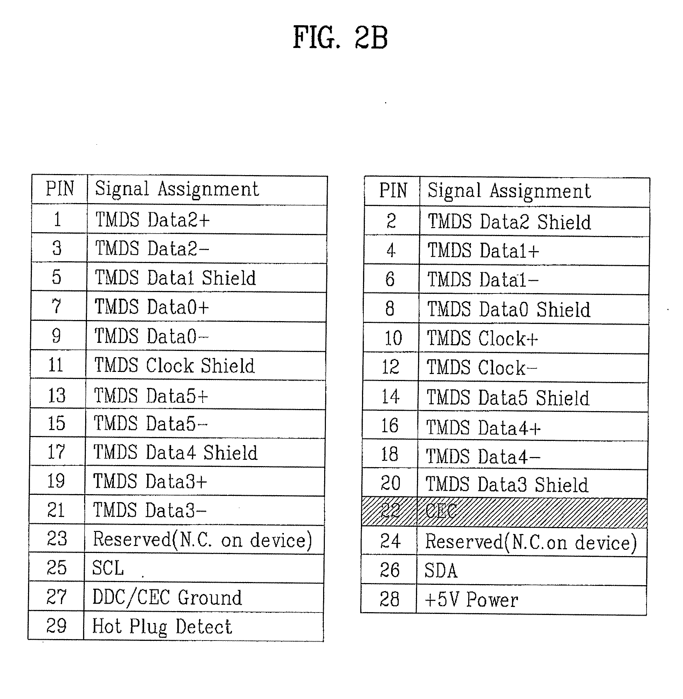

FIG. 2A and FIG. 2B are diagrams for pin arrays of an interface between source and sink devices according to an embodiment of the present invention.

Referring to FIG. 2A and FIG. 2B, a data transport supported by HDMI interface can be observed.

The HDMI interface includes CEC line that is a physical line for CEC protocol. Currently, the CEC protocol is not mandatory for HDMI standards but optional. Yet, in the HDMI standards, CEC line is defined in an interface and a physical address for CEC protocol is subscribed in E-EDID of HDMI. The physical address is an intrinsic identification number of each device and is essential for CEC protocol operation. So, a source device obtains information for a corresponding sink device based on the physical address.

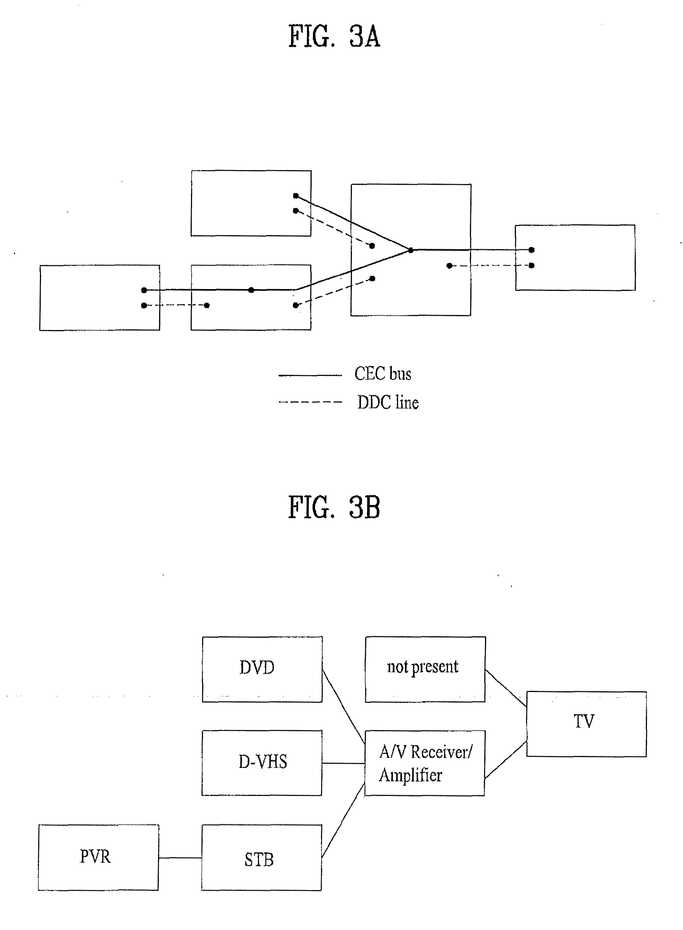

FIG. 3A is a diagram for an embodiment of a connection between a source device and a sink device via DDC line of data transport channel and CEC line of CEC transport channel.

Referring to FIG. 3A, unlike DDC line that connects a device to a device only, CEC line directly connects all the nodes on a network together.

As a plurality of media devices are connected, they find their physical addresses. The CEC device then transfers the physical addresses to other devices. So, a network map is generated through the address transfer.

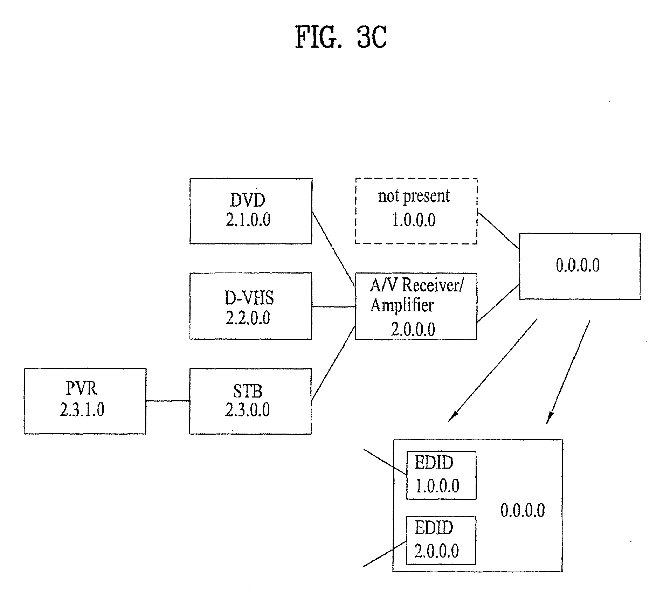

FIG. 3B and FIG. 3C are diagrams for embodiments of configuring CEC network through physical addresses.

Referring to FIG. 3B and FIG. 3C, a plurality of sink deices and source devices are connected together. At least one prescribed device performs both roles of the sink and source devices. Figures shown in the drawings indicate physical addresses of the devices, respectively. In the embodiments shown in the drawings, the physical addresses of the entire devices except TV are stored in E-EDID of the connected sink device. The physical address for CEC in E-EDID exists in all HDMI devices.

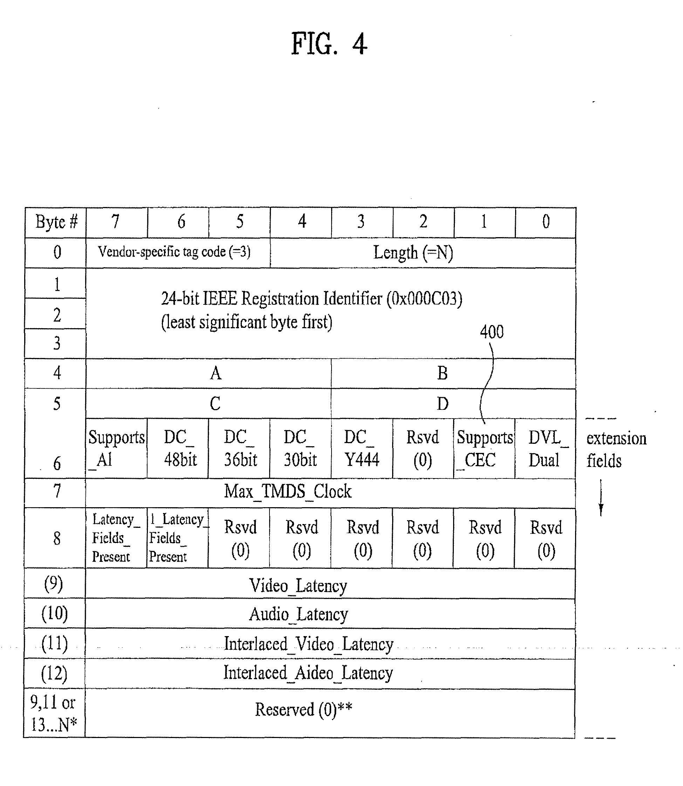

FIG. 4 is a table information table including CEC support information field of a media device according to the present invention.

Referring to FIG. 4, a device information table includes CEC support information field 400 indicating a presence or non-presence of CEC support information in a reserved field within a table.

Each sink device can include E-EID data structure. A source device reads E-EDID received via DDC line from the sink device and then recognizes capabilities or characteristics supported by the sink device. In particular, the E-EDID data structure indicates capabilities or characteristics of the sink device.

The E-EDID includes a data block that indicates device information, which is named a device information table. The scope of the appended claims and their equivalents is not restricted by the terminologies used in the present disclosure. As an example of the device information table, there is HDMI Vendor-Specific Data Block (HDMI VSDB). In the following description, VSDB is taken as an example for the embodiment of the present invention.

1^{st}, 2^{nd} and 3^{rd} bytes of the device information table indicate 24-bit IEEE registration identifier. If a value of the present field is set to 0X000C03, it indicates that a sink device is HDMI device. If the value does not exist, a source device decides a sink device as DVI.

Field A, B, C or D in 4^{th} or 5^{th} byte is a field in which a physical address is recorded. Based on A, B, C and D values recorded in the fields, a map of network for CEC protocol is generated.

6^{th} byte and bytes after the 6^{th} contain information for other characteristics of the sink device except the basic information. So, those bytes correspond to extension fields that indicate attributes of the sink device by extending a basic VSDB function.

For instance, Suports_A1 field of the 6^{th} byte indicates whether the sink device supports at least one function that uses information carried by ACP, ISRC1 or ISRC2 packet. For example, if the present field is set to 1, it indicates that the function is supported. If the present field is set to 0, it indicates that the function is not supported.

The device information table of the present invention includes CEC support information field 400 indicating whether CEC is supported or not.

The CEC support information field 400 represents the information indicating whether a connected media device supports CEC protocol. For example, if the CEC support information field is set to 0, it indicates that a media device does not support CEC. If the CEC support information field is set to 1, it indicates that a media device supports CEC.

Namely, in case that a physical address is discovered according to a CEC signal key that is inputted, the CEC support information field 400 indicates whether a media device having a corresponding physical address supports CEC or not.

A position, in which the CEC support information field is inserted, is not specified. Yet, in order not to change a configuration of a related art device information table, it can be inserted in a reserved field. In this case, the reserved field or a zero field is not currently used but reserved for a future use. A position is allocated to this field, which is not currently used, to prevent the whole table from being modified to add a field to a standardized table.

The CEC support information of the present invention can be inserted in any other position of VDSB or E-EDID. And, a description for whether CEC is supported can be added to the E-EDID.

Examples of the CEC support information description are as follows.

Bit Field '0': CEC is not supported.

Bit Field '1': CEC is supported.

In the present invention, 1-bit is proposed as a length off the CEC support information field.

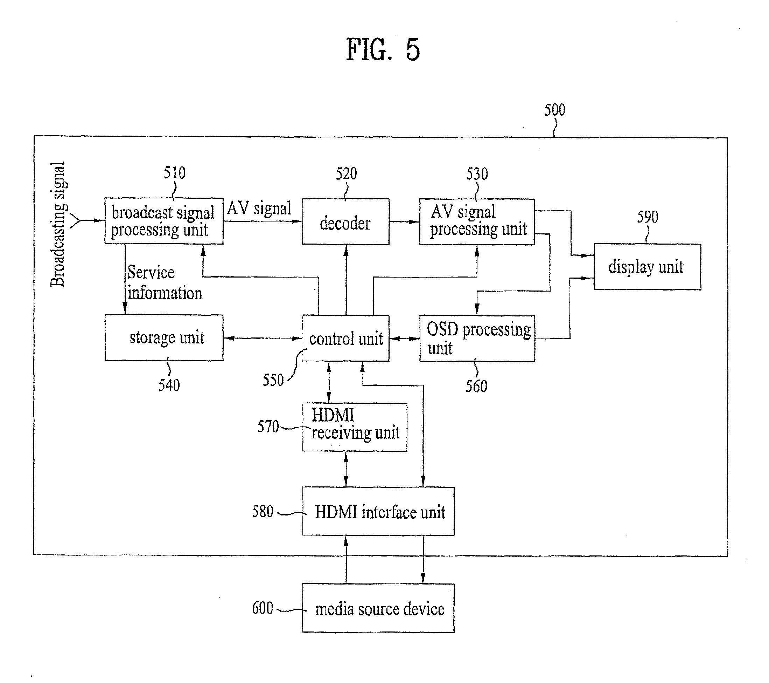

FIG. 5 is a block diagram of a media sink device according to one embodiment of the present invention.

Referring to FIG. 5, in a media sink device provided with media data by a media source device, the media sink device according to the present invention includes a storage unit for storing E-EDID including information indicating whether the media sink device supports CEC, an interface unit corresponding to a data transceiving path between the media source device and the media sink device, and a control unit connected to the media source device to send the E-EDID including the CEC support information to the connected media source device via the interface unit.

The sink device is a device for receiving media data such as multimedia contents and the like from a source device and displaying the received data externally. And, the sink device includes a broadcast receiver such as a television receiver and the like. In the following description, a broadcast receiver is taken as an example of the sink device.

In particular, a broadcast receiver 500 includes a broadcast signal processing unit 510, a decoder 520, an AV signal processing unit 530, a storage unit 540, a control unit 550, an OSD processing unit 560, an HDMI receiving unit 570, an HDMI interface unit 580, and a display unit 590.

The broadcast receiver may include a digital television receiver for example. In this case, the digital television receiver explicitly includes information indicating whether to support CEC protocol. And, the digital television receiver sends the corresponding information to the source device.

The broadcast signal processing unit 510 tunes a broadcast signal, demodulates and demultiplexes the received signal, and then transfers an AV signal to the decoder 520.

The decoder 520 parses a service information (SI) table, application information and the like. And, the decoder 520 receives basic stream packets of A/V and then decodes the received packets by one of MPEG-2, AC3 and the like.

The AV signal processing unit 530 synchronizes the decoded A/V data by a video display processor (VDP) and then transfers the synchronized data to the display unit 590 to be displayed thereon.

Thus, the broadcast receiver receives a broadcast and processes the received broadcast to display. And, the broadcast receiver also plays a role as a sink device to receive and display media data from a source device.

The interface unit means a path for transferring media data between sink and source devices connected to each other. The interface unit 580 includes HDMI or DVI unit according to a protocol. In the drawing, HDMI is shown for embodiment.

The interface unit 580 separates a channel of a transport path into transition minimized differential signaling (hereinafter abbreviated TMDS) channel, DDC, and CEC channel according to a type of transported data.

AV media data is received via the TMDS channel and data such as display data and the like is transported via the DDC.

The HDMI receiving unit 570 receives AV signal in the media data received from the source device and then processes the received signal for display.

The storage unit 540 includes E-EDID data structure. The E-EDID data structure indicates capabilities of characteristics of the sink device. And, the E-EDID is transferred via the DDC.

The E-EDID includes a data block indicating device information, which is named a device information table. The device information table includes CEC support information filed indicating whether CEC is supported. The CEC support information field represents information indicating whether a connected media device supports CEC protocol. For instance, if the CEC support information field is set to 0, it corresponds to a media device that does not support CEC. If the CEC support information field is set to 1, it corresponds to a media device that supports CEC.

In case that a physical address is discovered as a CEC signal key is inputted, the CEC support information field indicates whether the media device having the corresponding physical address supports the CEC.

The control unit 550 transfers the E-EDID data structure including the CEC support information stored in the storage unit 540 via the interface unit 580. Namely, the source device is informed of whether the sink device supports the CEC function.

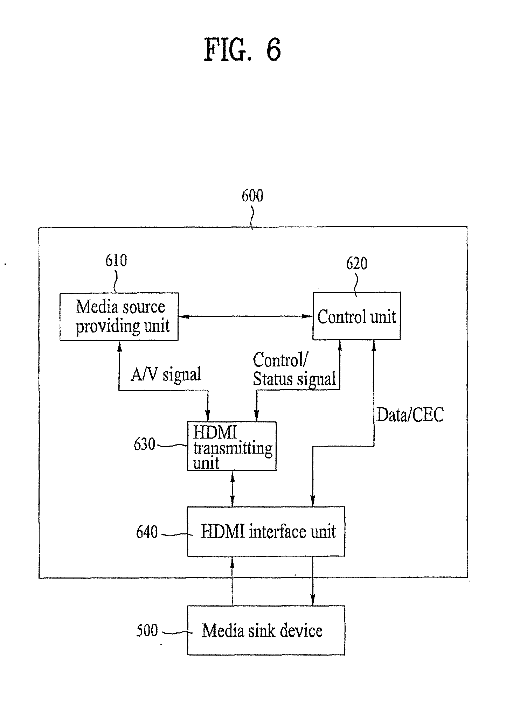

FIG. 6 is a block diagram of a media source device according to one embodiment of the present invention.

Referring to FIG. 6, in a media source device, which provides media data to a media sink device, the media source device according to one embodiment of the present invention includes a media source providing unit providing the media data to the media sink device, an interface unit as a data transceiving path between the media source device and the media sink device, and a control unit receiving E-EDID including CEC support information from the media sink device to decide whether the media sink device supports CEC.

The media source providing unit 610 provides the media data to the sink device 500. In particular, the media source providing unit 610 stores the media data or receives the media data and then transfers the media data to the sink device 500.

The HDMI interface unit 640 separates a channel according to a type of the media data and then transfers the media data to the sink device. E-EDID data structure is received from the sink device via the interface unit and then transferred to the control unit 620.

The control unit 620 recognizes device information provided by the sink device based on the E-EDID received from the sink device via the HDMI interface unit 640. In the E-EDID received from the sink device according to the present invention, information indicating whether the sink device supports the CEC function is included.

So, in case that the sink device does not support the CEC function, the source device can output an announcement message indicating that the CEC function is not supported if a CEC signal is inputted. In this case, a user is able to recognize that a non-response to the CEC signal input is not error. If the description for the CEC function is not included, it is unable to recognize whether it is the case that the CEC function is not supported or the case of CEC recognition error.

The media source device can further include a parsing unit for parsing the E-EDID received from the sink device. The parsing unit can exist within the elements or exist separate from the elements to be controlled by the control unit 620.

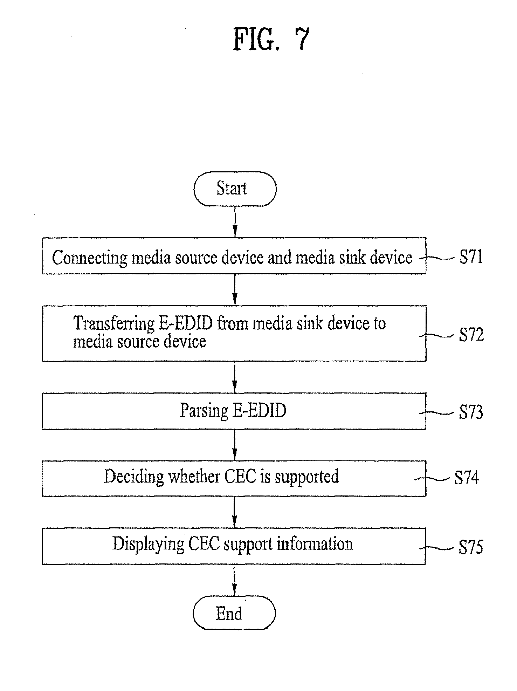

FIG. 7 is a flowchart of a method of controlling a media sink device according to one embodiment of the present invention.

Referring to FIG. 7, a method of controlling a media sink device according to one embodiment of the present invention includes a step (a) of connecting a media source device to the media sink device, a step (b) of transferring E-EDID from the media sink device to the media source device, and a step (c) of extracting CEC support information from the transferred E-EDID.

The step (a) is a step S71 of connecting the media source device and the media sink device together. If the media source device and the media sink device are connected to each other, the media source device detects Hot-Plug Detect (HPD) signal outputted from the media sink device in case of access and then recognizes an existence of the media sink device accessed to the media source device itself.

The step (b) is a step S72 that the media source device receives the E-EDID from the media sink device. In particular, the media source device recognizes detailed information for the media sink device via E-EDID outputted from the media sink device, transforms media data to fit a display environment of the media sink device using the recognized information, and then transfers the transformed data to the media sink device via TMDS system called a panel link. In this case, the E-EDID includes a manufacturer ID indicating a manufacturer, a manufacturing ID indicating a model name of product, information indicating whether a power saving mode function of a display device is supported, timing information, and the like. Preferably, the E-EDID of the present invention includes CEC support information.

The step (c) includes a step S73 of parsing the E-EDID and a step S74 of deciding whether CEC is supported based on the CEC support information.

So, the source device recognizes whether the CEC is supported or not. If CEC signal is inputted, the source device is able to display information indicating whether the CEC is supported or not (S75). In particular, when the CEC signal is inputted, if the sink device does not support the CEC, it is able to output an announcement message indicating that the CEC is not supported instead of a simple non-response.

It will be apparent to those skilled in the art that various modifications and variations can be made in the implementations without departing from the spirit or scope of the above implementations. Thus, other implementations are within the scope of the following claims.

## Claims

1. A media sink device, which is provided with media data from a media source device, the media sink device comprising:
a storage unit for storing E-EDID (Enhanced-Extended Display Identification Data) including information indicating whether the media sink device supports CEC (Consumer Electronics Control);
an interface unit corresponding to a data transceiving path between the media source device and the media sink device; and
a control unit connected to the media source device to send the E-EDID including the CEC support information to the connected media source device via the interface unit.

2. The media sink device of claim 1, wherein the storage unit includes an E-EDID data structure and wherein the E-EDID includes a device information table as a data block indicating device information.

3. The media sink device of claim 2, wherein the device information table includes a CEC support information field indicating a presence or non-presence of CEC support.

4. The media sink device of claim 3, wherein the CEC support information field is 1-bit.

5. The media sink device of claim 3, wherein the CEC support information field is inserted in a reserved field of the device information table.

6. The media sink device of claim 3, wherein the E-EDID data structure includes a CEC support information description for describing the CEC support information field.

7. The media sink device of claim 1, wherein the interface unit includes a TMDS (transition minimized differential signaling) channel, a DDC (display data channel), and a CEC channel as data transport paths and wherein the E-EDID is transferred via the DDC.

8. A media source device, which provides media data to a media sink device, the media source device comprising:
a media source providing unit providing the media data to the media sink device;
an interface unit corresponding to a data transceiving path between the media source device and the media sink device; and
a control unit receiving E-EDID including CEC support information from the media sink device to decide whether the media sink device supports CEC.

9. The media source device of claim 8, wherein the interface unit includes a TMDS channel, a DDC, and a CEC channel as data transport paths and wherein the E-EDID is received via the DDC.

10. The media source device of claim 8, further comprising a parsing unit extracting the CEC support information by parsing the received E-EDID.

11. The media source device of claim 8, wherein if the control unit decides that the media sink device does not support the CEC based on the CEC support information, the control unit outputs an announcement message.

12. A method of controlling a media sink device, which is provided with media data from a media source device, the method comprising the steps of:
connecting a media source device to the media sink device;
transferring E-EDID from the media sink device to the media source device; and
extracting CEC support information from the transferred E-EDID.

13. The method of claim 12, wherein in the step of connecting the media source device and the media sink device together, the media source device detects an HPD (Hot-Plug Detect) signal outputted from the media sink device and then recognizes an existence of the media sink device accessed to the media source device itself.

14. The method of claim 12, wherein the E-EDID includes a CEC support information field.

15. The method of claim 14, wherein in the step of extracting the CEC support information from the transferred E-EDID, the CEC support information field is extracted by parsing the E-EDID.

16. The method of claim 12, wherein an announcement message for a CEC function support is outputted based on the extracted CEC support information.
